# EUROPÄISCHE PATENTSCHRIFT

(11) **EP 2 328 419 B1**
(45) Veröffentlichungstag und Bekanntmachung des Hinweises auf die Patenterteilung: **25.03.2015**
(21) Anmeldenummer: 09778476.3
(22) Anmeldetag: 04.09.2009
(51) Int. Cl.: A22C 25/16, A22C 25/18

(54) **VORRICHTUNG UND VERFAHREN ZUM BEARBEITEN VON FLEISCH, INSBESONDERE FISCH**
DEVICE AND METHOD FOR PROCESSING MEAT, PARTICULARLY FISH
DISPOSITIF ET PROCÉDÉ DE TRAITEMENT DE CHAIR, EN PARTICULIER DE POISSON

(30) Priorität: 01.10.2008 DE 102008050491
(43) Veröffentlichungstag der Anmeldung: 08.06.2011
(73) Patentinhaber: Nordischer Maschinenbau Rud. Baader GmbH + Co. KG, 23560 Lübeck (DE)
(72) Erfinder: GRIMM, Oliver, 19061 Schwerin (DE); RUSKO, Torsten, 23923 Herrnburg (DE); NEUMANN, Ralf, 23628 Klempau (DE)
(74) Vertreter: Stork Bamberger
(86) Internationale Anmeldenummer: PCT/EP2009/006598
(87) Internationale Veröffentlichungsnummer: WO 2010/037470

(56) Entgegenhaltungen:
- EP-A1- 0 341 335
- WO-A1-00/37822
- BE-A- 520 847
- US-A- 3 541 634
- US-A- 4 091 506

## Beschreibung

Die Erfindung betrifft eine Vorrichtung zum Bearbeiten von Fleisch, insbesondere Fisch, umfassend ein Bearbeitungswerkzeug, eine dem Bearbeitungswerkzeug zugeordnete Betätigungseinheit zum Bewegen des Bearbeitungswerkzeugs aus einer Ausgangsposition in eine Bearbeitungsposition und umgekehrt sowie eine Steuerungseinrichtung, die mit dem Bearbeitungswerkzeug bzw. der Betätigungseinheit zur Steuerung des Bearbeitungswerkzeugs in Wirkverbindung steht, wobei die Betätigungseinheit eine Zylindereinheit mit zwei Druckzylindern umfasst, wobei die zwei Druckzylinder hintereinander angeordnet und miteinander verbunden sind und das Bearbeitungswerkzeug an einem der beiden Druckzylinder der Zylindereinheit angeordnet ist, und die beiden Druckzylinder unabhängig voneinander steuerbar sind. Des Weiteren betrifft die Erfindung ein Verfahren zum Bearbeiten von Fleisch, insbesondere Fisch, umfassend die Schritte: Zuführen der zu bearbeitenden Produkte in den Bereich eines Bearbeitungswerkzeugs, Bearbeiten der Produkte mittels des Bearbeitungswerkzeugs, und Abtransportieren der bearbeiteten Produkte aus dem Bereich des Bearbeitungswerkzeugs, wobei das Bearbeitungswerkzeug zum schnellen Zustellen des Bearbeitungswerkzeugs zum Produkt und schnellen Abheben des Bearbeitungswerkzeugs vom Produkt weg von einem ersten Druckzylinder gesteuert wird, und dass die durch die Beschleunigung beim schnellen Zustellen und Abheben auftretenden Kräfte einerseits sowie die Bearbeitungskraft während der Bearbeitung andererseits von einem zweiten Druckzylinder gesteuert werden.

Solche Vorrichtungen und Verfahren kommen in der Nahrungsmittel verarbeitenden Industrie und insbesondere bei der Bearbeitung von Fleisch und Fisch zum Einsatz (vgl. Dokument EP 0 341 335 A1). Bei der Bearbeitung, also üblicherweise dem Schneiden und/oder Trimmen von Fleisch und insbesondere Fisch ist es notwendig, das Bearbeitungswerkzeug bzw. die Bearbeitungswerkzeuge individuell zu steuern, um ein zufrieden stellendes Ergebnis zu erzielen. Am Beispiel der Oberflächentrimmung von Fischfilets bedeutet dies, dass auf der Oberfläche der Fischfilets unerwünschte und/oder Wert mindernde Bestandteile entfernt werden. Die zu entfernenden Bestandteile einerseits, die unterschiedliche Lage der Produkte andererseits sowie unterschiedliche Größen und/oder Konturen und/oder Topographien machen dabei eine individuelle Steuerung und insbesondere eine Anpassung des Schnittdrucks an die zu bearbeitenden Produkte notwendig.

Neben dem manuellen Bearbeiten, das aus verständlichen Gründen sehr teuer und im Übrigen auch sehr ungenau ist, sind Vorrichtungen bekannt, bei denen die Bearbeitungswerkzeuge eine automatisierte Bearbeitung vornehmen. Beispielsweise ist es bekannt, Bearbeitungswerkzeuge motorisch in Kontakt mit den zu bearbeitenden Produkten zu bringen. Der DE 10 2005 047 752 B3 ist eine Vorrichtung zu entnehmen, bei der das Bearbeitungswerkzeug an einem Flanschelement angeordnet ist. Das Flanschelement selbst ist einem Hebelelement zugeordnet, das wiederum einer Schwinge zugeordnet ist. Das Hebelelement ist zum Anpassen des Schnittdrucks zusätzlich über ein Ausgleichselement mit der Schwinge verbunden. Das Ausgleichselement kann z.B. ein Federelement oder ein Pneumatik- oder Hydraulikzylinder sein.

Sämtlichen bekannten Vorrichtungen und Verfahren ist jedoch der Nachteil gemeinsam, dass sie zum einen konstruktiv sehr aufwendig sind bzw. umständlich zu handhaben sind und zum anderen mit den herkömmlichen Mitteln keine stabile und funktionierende Bearbeitung zu erreichen ist. Am Beispiel von Fischfilets ist es insbesondere schwierig, bei der Bearbeitung der Filetoberfläche ein zufrieden stellendes Ergebnis zu erzielen. Der Einsatz von Federelementen oder einem Druckzylinder als Ausgleichselement führt insbesondere bei schnellen bzw. abrupten Bewegungen zu einem "Überschwingen" des Bearbeitungswerkzeugs, was die Bearbeitungsqualität negativ beeinflusst.

Es ist daher Aufgabe der vorliegenden Erfindung, eine einfache Vorrichtung zu schaffen, mittels der eine stabile und zuverlässige Bearbeitung gewährleistet wird. Des Weiteren ist es Aufgabe der Erfindung, ein entsprechendes Verfahren vorzuschlagen.

Diese Aufgabe wird durch eine Vorrichtung gemäß Anspruch 1 gelöst. Durch die erfindungsgemäße Ausbildung und Anordnung kann quasi ein "Schwebezustand" des Bearbeitungswerkzeugs erreicht werden. Ein weiterer Vorteil besteht darin, dass sich sowohl die Bewegungen der einzelnen Druckzylinder als auch die Massenträgheit des Bearbeitungswerkzeugs kompensieren lassen, so dass eine stabile und schnelle Arbeitsweise realisiert werden kann. Erfindungsgemäß ist der untere Druckzylinder als aktives Dämpfungselement ausgebildet und eingerichtet. Damit wird insbesondere die Massenträgheit des Bearbeitungswerkzeugs auf besonders effektive Weise aufgefangen.

Eine zweckmäßige Weiterbildung der Erfindung ist dadurch gekennzeichnet, dass jeder Druckzylinder einen separaten Schaltkreis mit mindestens einem Druckventil aufweist. Mit dieser Ausführung lässt sich das Bearbeitungswerkzeug besonders präzise für eine individuelle und exakte Bearbeitung steuern.

Eine bevorzugte Weiterbildung der Erfindung zeichnet sich dadurch aus, dass die aus beiden Druckzylindern gebildete Zylindereinheit schwenkbar ausgebildet ist. Mit dieser Ausbildung werden zusätzliche Freiheitsgrade geschaffen, die eine individuelle Bearbeitung unterstützen.

Vorzugsweise ist das Bearbeitungswerkzeug in einer weiteren Ausführungsform der Erfindung gelenkig an einer Kolbenstange des unteren Druckzylinders angeordnet, wodurch weitere Freiheitsgrade bei der Bewegbarkeit des Bearbeitungswerkzeugs geschaffen werden.

Die Aufgabe wird auch durch ein Verfahren gemäß Anspruch 9 gelöst. Die sich aus den erfindungsgemäßen Verfahrensschritten ergebenden Vorteile wurden bereits im Zusammenhang mit der erfindungsgemäßen Vorrichtung genannt, so dass zur Vermeidung von Wiederholungen auf die entsprechenden Passagen verwiesen wird.

Weitere zweckmäßige und/oder vorteilhafte Merkmale und Ausgestaltungen ergeben sich aus den Unteransprüchen und der Beschreibung. Eine besonders bevorzugte Ausführungsform wird anhand der beigefügten Zeichnung näher erläutert. In der Zeichnung zeigt:
- Fig. 1: eine schematische Darstellung einer Druckzylinderanordnung mit entsprechendem Schaltkreis, wobei dem Schaltkreis für den unteren Druckzylinder ein proportionales Druckregelventil zugeordnet ist, und
- Fig. 2: eine schematische Darstellung einer Druckzylinderanordnung mit entsprechendem Schaltkreis, wobei dem Schaltkreis für den unteren Druckzylinder zwei proportionale Druckregelventile zugeordnet sind.

Die in den Figuren dargestellten Anordnung dienen zum Oberflächentrimmen bei Fischfilets. Die Anordnungen sind jedoch selbstverständlich zur Bearbeitung von anderen Produkten, insbesondere Fleisch- und Fischprodukten, geeignet, wobei die Bearbeitung insbesondere das Schneiden und Trimmen einschließt. Die Druckzylinderanordnung kann jedoch neben der Steuerung von Trenn- und/oder Trimmelementen ebenfalls zur Feinsteuerung anderer Werkzeuge, wie z.B. Bohrwerkzeugen, Schleifwerkzeugen oder dergleichen eingesetzt werden.

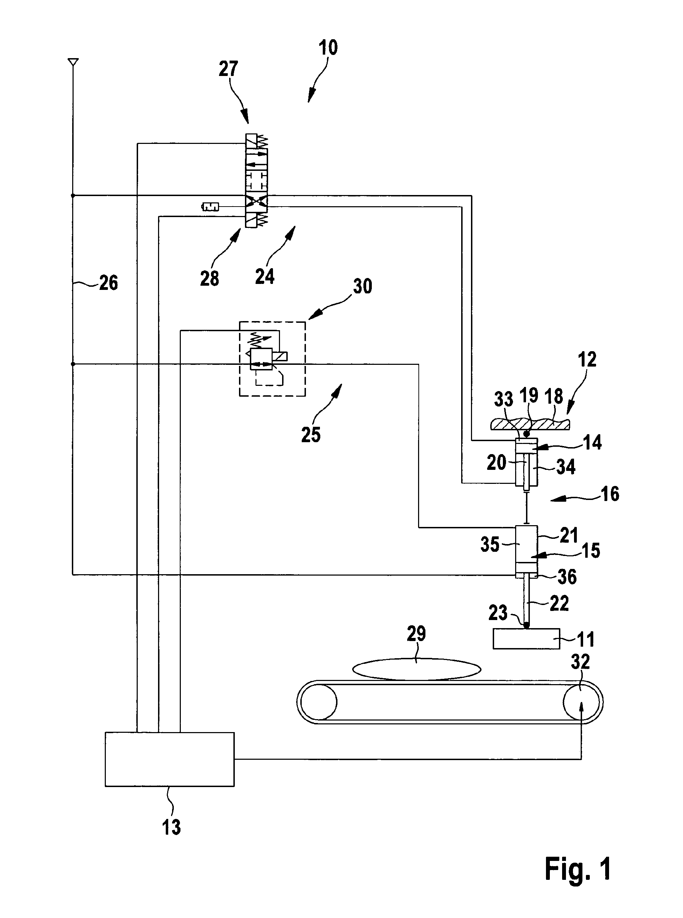

In der Figur 1 ist eine erste bevorzugte Ausführungsform der erfindungsgemäßen Vorrichtung 10 schematisch dargestellt. Die Vorrichtung 10 dient zum Bearbeiten von Fleisch und insbesondere von Fisch und umfasst mindestens ein Bearbeitungswerkzeug 11, eine Betätigungseinheit 12 und eine Steuerungseinrichtung (im Folgenden auch als Steuerung bezeichnet) 13. Die Betätigungseinheit 12 ist dem Bearbeitungswerkzeug 11 zum Bewegen des Bearbeitungswerkzeugs 11 aus einer (oberen) Ausgangsposition in eine (untere) Bearbeitungsposition und umgekehrt zugeordnet. Die Steuerung 13 steht mit dem Bearbeitungswerkzeug 11 bzw. der Betätigungseinheit 12 zur Steuerung des Bearbeitungswerkzeugs 11 und genauer zur Ausführung der Arbeitsbewegungen in Wirkverbindung.

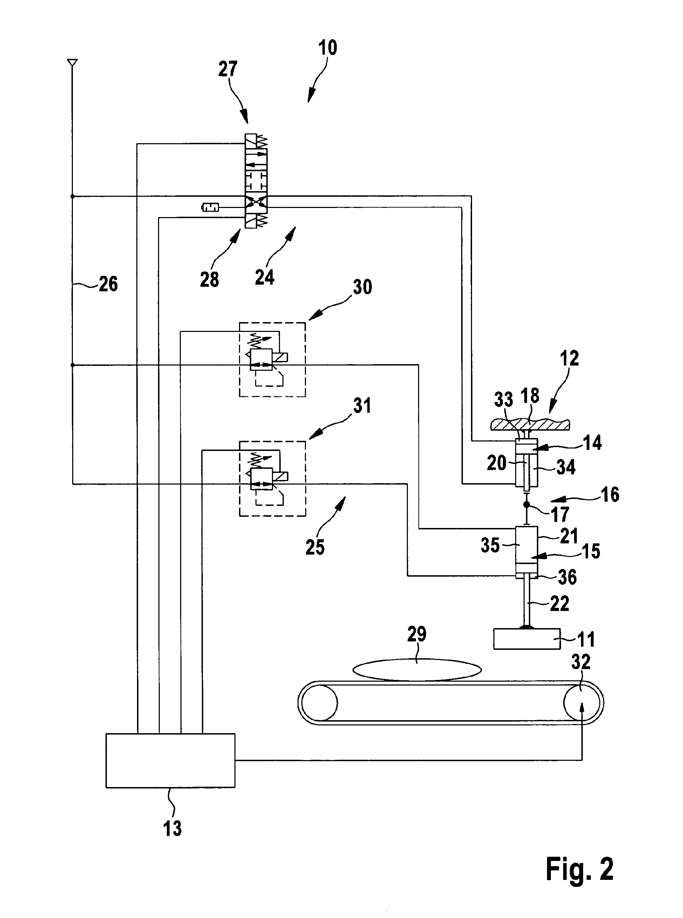

Die Betätigungseinheit 12 umfasst erfindungsgemäß mindestens zwei Druckzylinder 14 und 15, die eine Zylindereinheit 16 bilden. Die Druckzylinder 14, 15, die pneumatisch oder hydraulisch betätigbar sind, sind in Reihe hintereinander angeordnet und miteinander verbunden. Die beiden Druckzylinder 14, 15 können starr (siehe Figur 1) oder, wie in Figur 2 dargestellt, gelenkig miteinander verbunden sein, beispielsweise über einen Gelenkpunkt 17. Das Bearbeitungswerkzeug 11 ist an der Zylindereinheit 16, nämlich einem der beiden Druckzylinder 14, 15 angeordnet. Die zwei oder mehr Druckzylinder 14, 15 sind unabhängig voneinander steuerbar. Dazu kann jedem Druckzylinder 14, 15 eine separate Steuerung zugeordnet sein. Bevorzugt ist jedoch, wie in der beschriebenen Ausführung gezeigt, eine gemeinsame Steuerung 13.

Die Zylindereinheit 16 kann an einem festen Element, beispielsweise einem Maschinenrahmen oder dergleichen angeordnet sein. Vorzugsweise ist die Zylindereinheit 16 an einem beweglichen Element 18 angeordnet. Die Verbindung zwischen der Zylindereinheit 16 und dem beweglichen Element 18 kann starr (siehe Figur 2) oder gelenkig, beispielsweise über einen Gelenkpunkt 19 (siehe Figur 1), ausgebildet sein. Einer der Druckzylinder 14, der als oberer Druckzylinder definiert wird, ist an dem Element 18 angeordnet. Der zweite Druckzylinder 15, der als unterer Druckzylinder definiert wird, ist mit dem oberen Druckzylinder 14 verbunden, wobei die Definition oben und unten beliebig ist. Genauer ist eine Kolbenstange 20 des oberen Druckzylinders 14 am Gehäuse 21 des unteren Druckzylinders 15 direkt oder über den Gelenkpunkt 17 befestigt. Optional können die beiden Gehäuse der Druckzylinder 14, 15 auch direkt miteinander verbunden sein, wobei dann die Kolbenstange 20 des oberen Druckzylinders 14 nach oben heraus ragt und eine Kolbenstange 22 des unteren Druckzylinders 15 nach unten heraus ragt. Alternativ kann auch ein gemeinsames Gehäuse mit vier Kammern vorgesehen sein. Das Bearbeitungswerkzeug 11 ist am unteren Druckzylinder 15, nämlich an der Kolbenstange 22 des unteren Druckzylinders 15 angeordnet. Auch diese Verbindung zwischen Kolbenstange 22 und Bearbeitungswerkzeug 11 kann starr (siehe Figur 2) oder bevorzugt gelenkig, beispielsweise über einen Gelenkpunkt 23 (siehe Figur 1), ausgebildet sein. In weiteren Ausführungsformen können die Gelenkpunkte 17, 19, und 23 auch variieren. Das bedeutet, dass z.B. alle Verbindungen gelenkig oder alle Verbindungen starr oder Kombinationen davon realisiert sind.

Jedem Druckzylinder 14, 15 ist erfindungsgemäß ein separater Schaltkreis 24, 25 zugeordnet. Die Schaltkreise 24, 25 sind über Leitungen 26 an ein gemeinsames Drucksystem angeschlossen, wobei auch separate Drucksysteme möglich sind. Die Leitungen 26 führen vom gemeinsamen, zentralen Drucksystem jeweils zu beiden Kammern 33, 34 bzw. 35, 36 der Druckzylinder 14, 15, also zu der oberen Kammer 33 und der unteren Kammer 34 des Druckzylinders 14 bzw. zu der oberen Kammer 35 und der unteren Kammer 36 des Druckzylinders 15. Zur Steuerung des Drucks ist jedem Schaltkreis 24, 25 mindestens ein Ventil zugeordnet. Bevorzugt weist der Schaltkreis 24 für den oberen Druckzylinder 14, der vorzugsweise zum schnellen Bewegen des Bearbeitungswerkzeugs 11 aus der Ausgangsposition in die Bearbeitungsposition und zurück ausgebildet und eingerichtet ist, beispielsweise zwei pneumatische Wegeventile 27, 28 auf. Der Schaltkreis 25 für den unteren Druckzylinder 15, der vorzugsweise für die Feineinstellung der Bearbeitungskraft des Bearbeitungswerkzeugs 11 auf das zu bearbeitende Produkt 29 ausgebildet und eingerichtet ist, weist bevorzugt ein proportionales Druckregelventil 30 auf. Das proportionale Druckregelventil 30 ist, wie aus der Figur 1 hervorgeht, der oberen (kolbenseitigen) Kammer 35 des Druckzylinders 15 zugeordnet. In einer weiteren in Figur 2 dargestellten Ausführungsform kann der Schaltkreis 25 auch zwei proportionale Druckregelventile 30, 31 umfassen, wobei das proportionale Druckregelventil 30 der oberen Kammer 35 und das proportionale Druckregelventil 31 der unteren (kolbenstangenseitigen) Kammer 36 des Druckzylinders 15 zugeordnet ist. Selbstverständlich kann die Anzahl und Ausbildung der Elemente zum Steuern und/oder Regeln des Drucks, also insbesondere auch der Ventile variieren.

Durch die Auswahl der Elemente zum Steuern und/oder Regeln des Drucks ist vorzugsweise der untere Druckzylinder 15 mit den proportionalen Druckregelventilen 30, 31 als aktives Dämpfungselement ausgebildet und eingerichtet. Selbstverständlich sind andere oder ergänzende aktive Dämpfungsglieder ebenfalls möglich. Wie bereits erwähnt, ist die Zylindereinheit 16 bevorzugt schwenkbar ausgebildet. Die Schwenkbewegung kann auf unterschiedlichste Weise realisiert sein.

Die Vorrichtung 10 kann als Nachrüstsatz für bestehende Bearbeitungsmaschinen eingesetzt werden. Dazu ist die Vorrichtung 10 vorzugsweise oberhalb eines in Figuren 1 und 2 angedeuteten Transportelementes 32 angeordnet. Das Transportelement 32 und/oder ein (nicht dargestellter) Positionsgeber, der vorzugsweise im Bereich des Transportelementes 32 angeordnet ist, kann optional mit der Steuerung 13 in Wirkverbindung stehen. Die Vorrichtung 10 kann aber auch Bestandteil einer Bearbeitungsmaschine zur automatischen Be- und Verarbeitung von Produkten 29 sein.

Im Folgenden wird das Verfahrensprinzip anhand der Figur 1 näher erläutert: Üblicherweise wird das zu bearbeitende Produkt 29 in den Bereich des Bearbeitungswerkzeugs 11 transportiert, wobei sich das Bearbeitungswerkzeug 11 in einer oberen Ausgangsposition befindet. Das Bearbeitungswerkzeug 11 hängt an dem unteren (Druckzylinder 15) der beiden die Zylindereinheit 16 bildenden Druckzylinder 14, 15. In der Ausgangsposition ist der obere Druckzylinder 14 hochgefahren. Das bedeutet, dass die Kolbenstange 20 eingefahren ist. Der untere Druckzylinder 15 bzw. die entsprechende Kolbenstange 22 ist ausgefahren. Der untere Druckzylinder 15 wird über das proportionale Druckregelventil 30 mit soviel Druck (aus der oberen Kammer 35 des unteren Druckzylinders 15) versorgt, dass der Druckzylinder 15 beim schnellen Absenken des Bearbeitungswerkzeugs 11 nicht durch die Massenträgheit des Bearbeitungswerkzeugs 11 beim Beschleunigen eingefahren wird. Nach dem "Anfahren" des oberen Druckzylinders 14, also nachdem die Massen durch das Ausfahren des oberen Druckzylinders 14 beschleunigt sind, steuert das proportionale Druckregelventil 30 den Kolben bzw. die Kolbenstange 22 des unteren Druckzylinders 15 etwas in den Druckzylinder 15 hinein. Dadurch, dass der untere Druckzylinder 15 in der Ausführungsform gemäß Figur 1 in der unteren Kammer 36 mit konstantem (Maximal-)Druck versorgt wird, führt eine Reduzierung des Drucks in der oberen Kammer 35 des unteren Druckzylinders 15 nämlich zu einer nach oben gerichteten Kraft bzw. Bewegung. Diese Kraft/Bewegung wird zum Dämpfen der Werkzeugbewegung und zur Veränderung der Anlagekraft des Bearbeitungswerkzeugs 11 auf dem Produkt 29 während der Bearbeitung genutzt. Um diesen Effekt zu erreichen, ist das proportionale Druckregelventil 30 derart ausgebildet, den wirksamen Druck im Druckzylinder 15, also insbesondere in der oberen Kammer 35, sehr schnell zu beeinflussen. Die Druckreduzierung in der oberen Kammer 35 des unteren Druckzylinders 15 erfolgt insbesondere auch deswegen, um einen Pufferweg zu schaffen, damit das weiche Aufsetzen des Bearbeitungswerkzeugs 11 auf das Produkt 29 gewährleistet wird, wenn der obere Druckzylinder 14 (schlagartig) seine Endlage erreicht.

Während der Bearbeitung des Produkts 29 wird die Bearbeitungskraft des Bearbeitungswerkzeugs 11 über den regelbaren Druck in der oberen Kammer 35 des unteren Druckzylinders 15 gesteuert bzw. geregelt. Am Ende der Bearbeitung wird der obere Druckzylinder 14 wieder eingefahren und der regelbare Druck des unteren Druckzylinders 15 so weit erhöht, dass er beim Abbremsen nicht durch die Massenträgheit des Bearbeitungswerkzeugs 11 eingefahren werden kann. Optional kann der Druck des unteren Druckzylinders 15 so verändert werden, dass es beim (schlagartigen) Erreichen der oberen Endlage des oberen Druckzylinders 14 zu einem weichen Abbremsen des Bearbeitungswerkzeugs 11 in der oberen Warteposition kommt. Zusammenfassend kann man auch sagen, dass sich die beiden Druckzylinder 14, 15 beim Beschleunigen bzw. Abbremsen kompensieren. Anders ausgedrückt wird die schnelle Bewegung beim Absenken und Hochfahren durch den oberen Druckzylinder 14 vom unteren Druckzylinder 15 gedämpft. Dadurch wird eine stabile und schnelle Arbeitsweise ermöglicht.

Das Verfahren mit der Ausführungsform gemäß Figur 2 erfolgt prinzipiell gleich. Allerdings lässt sich der Druck in der unteren Kammer 36 des unteren Druckzylinders 15 durch das proportionale Druckregelventil 31 zusätzlich variieren, wodurch eine noch individuellere Steuerung des Bearbeitungswerkzeugs 11 gewährleistet ist.

## Patentansprüche

1. Vorrichtung (10) zum Bearbeiten von Fleisch, insbesondere Fisch, umfassend ein Bearbeitungswerkzeug (11), eine dem Bearbeitungswerkzeug (11) zugeordnete Betätigungseinheit (12) zum Bewegen des Bearbeitungswerkzeugs (11) aus einer Ausgangsposition in eine Bearbeitungsposition und umgekehrt sowie eine Steuerungseinrichtung (13), die mit dem Bearbeitungswerkzeug (11) bzw. der Betätigungseinheit (12) zur Steuerung des Bearbeitungswerkzeugs (11) in Wirkverbindung steht, wobei die Betätigungseinheit (12) eine Zylindereinheit (16) mit zwei Druckzylindern (14, 15) umfasst, wobei die zwei Druckzylinder hintereinander angeordnet und miteinander verbunden sind, und das Bearbeitungswerkzeug (11) an einem der beiden Druckzylinder (15) der Zylindereinheit (16) angeordnet ist und die beiden Druckzylinder (14, 15) unabhängig voneinander steuerbar sind, **dadurch gekennzeichnet, dass** der untere Druckzylinder (15) als aktives Dämpfungselement ausgebildet und eingerichtet ist.

2. Vorrichtung nach Anspruch 1, **dadurch gekennzeichnet, dass** jeder Druckzylinder (14, 15) einen separaten Schaltkreis (24, 25) mit mindestens einem Ventil aufweist.

3. Vorrichtung nach Anspruch 2, **dadurch gekennzeichnet, dass** dem Schaltkreis (25) des unteren Druckzylinders (15) mindestens ein proportionales Druckregelventil (30, 31) zugeordnet ist.

4. Vorrichtung nach einem der Ansprüche 1 bis 3, **dadurch gekennzeichnet, dass** das Bearbeitungswerkzeug (11) am unteren Druckzylinder (15) angeordnet ist.

5. Vorrichtung nach einem der Ansprüche 1 bis 4, **dadurch gekennzeichnet, dass** die aus den beiden Druckzylindern (14, 15) gebildete Zylindereinheit (16) schwenkbar ausgebildet ist.

6. Vorrichtung nach einem der Ansprüche 1 bis 5, **dadurch gekennzeichnet, dass** das Bearbeitungswerkzeug (11) gelenkig an einer Kolbenstange (22) des unteren Druckzylinders (15) angeordnet ist.

7. Vorrichtung nach einem der Ansprüche 1 bis 6, **dadurch gekennzeichnet, dass** die Druckzylinder (14, 15) pneumatisch oder hydraulisch betätigbar sind.

8. Vorrichtung nach einem der Ansprüche 2 bis 7, **dadurch gekennzeichnet, dass** beide Schaltkreise (24, 25) an eine gemeinsame Steuerungseinrichtung (13) angeschlossen sind.

9. Verfahren zum Bearbeiten von Fleisch, insbesondere Fisch, umfassend die Schritte:
- Zuführen der zu bearbeitenden Produkte (29) in den Bereich eines Bearbeitungswerkzeugs (11),
- Bearbeiten der Produkte (29) mittels des Bearbeitungswerkzeugs (11), und
- Abtransportieren der bearbeiteten Produkte (29) aus dem Bereich des Bearbeitungswerkzeugs (11), wobei das Bearbeitungswerkzeug (11) zum schnellen Zustellen des Bearbeitungswerkzeugs (11) zum Produkt (29) und schnellen Abheben des Bearbeitungswerkzeugs (11) vom Produkt (29) weg von einem ersten Druckzylinder (14) gesteuert wird, und dass die durch die Beschleunigung beim schnellen Zustellen und Abheben auftretenden Kräfte einerseits sowie die Bearbeitungskraft während der Bearbeitung andererseits von einem zweiten Druckzylinder (15) gesteuert werden, **dadurch gekennzeichnet, dass** der untere Druckzylinder (15) zum Steuern der Beschleunigungskräfte und der Bearbeitungskraft: an seiner unteren Seite mit konstantem Systemdruck versorgt wird, während der Druck an der oberen Seite variiert.

10. Verfahren nach Anspruch 9, **dadurch gekennzeichnet, dass** beide Druckzylinder (14, 15) jeweils über einen eigenen Schaltkreis (24, 25) gesteuert und/oder geregelt werden.

11. Verfahren nach Anspruch 9 oder 10, **dadurch gekennzeichnet, dass** der obere Druckzylinder (14) zum schnellen Absenken und Hochfahren des Bearbeitungswerkzeugs (11) von pneumatischen oder hydraulischen Ventilen gesteuert wird.

12. Verfahren nach einem der Ansprüche 9 bis 11, **dadurch gekennzeichnet, dass** die aus den beiden Druckzylindern (14, 15) gebildete Zylindereinheit (16) und damit das der Zylindereinheit (16) zugeordnete Bearbeitungswerkzeug (11) zur Ausführung der Bearbeitungsschritte geschwenkt werden kann.

13. Verfahren nach einem der Ansprüche 9 bis 12, **dadurch gekennzeichnet, dass** das Bearbeitungswerkzeug (11) relativ zur der aus den beiden Druckzylindern (14, 15) gebildeten Zylindereinheit (16) geschwenkt werden kann.

## Claims

1. Apparatus (10) for processing meat, in particular fish, comprising a processing tool (11), an actuating unit (12) associated with the processing tool (11) for moving the processing tool (11) out of a starting position into a processing position and vice versa, and a control device (13) which is operatively connected to the processing tool (11) or actuating unit (12) for control of the processing tool (11), wherein the actuating unit (12) comprises a cylinder unit (16) with two pressure cylinders (14, 15), wherein the two pressure cylinders (14, 15) are arranged one behind the other and connected to each other, and the processing tool (11) is arranged on one of the two pressure cylinders (15) of the cylinder unit (16) and the two pressure cylinders (14, 15) can be controlled independently of each other, **characterised in that** the lower pressure cylinder (15) is constructed and designed as an active damping element.

2. Apparatus according to claim 1, **characterised in that** each pressure cylinder (14, 15) has a separate circuit (24, 25) with at least one valve.

3. Apparatus according to claim 2, **characterised in that** associated with the circuit (25) of the lower pressure cylinder (15) is at least one proportional pressure regulating valve (30, 31).

4. Apparatus according to any one of claims 1 to 3, **characterised in that** the processing tool (11) is arranged on the lower pressure cylinder (15).

5. Apparatus according to any one of claims 1 to 4, **characterised in that** the cylinder unit (16) composed of the two pressure cylinders (14, 15) is constructed to be pivotable.

6. Apparatus according to any one of claims 1 to 5, **characterised in that** the processing tool (11) is pivotably arranged on a piston rod (22) of the lower pressure cylinder (15).

7. Apparatus according to any one of claims 1 to 6, **characterised in that** the pressure cylinders (14, 15) can be operated pneumatically or hydraulically.

8. Apparatus according to any one of claims 2 to 7, **characterised in that** both circuits (24, 25) are connected to a common control device (13).

9. Method for processing meat, in particular fish, comprising the steps of:
- delivering the products (29) to be processed into the region of a processing tool (11),
- processing the products (29) by means of the processing tool (11), and
- currying away the processed products (29) out of the region of the processing tool (11),
wherein the processing tool (11) is controlled by a first pressure cylinder (14) for rapid delivery of the processing tool (11) to the product (29) and rapid lifting of the processing tool (11) away from the product (29), and in that the forces arising due to acceleration during rapid delivery and lifting on the one hand, and the processing force during processing on the other hand, are controlled by a second pressure cylinder (15), **characterized in that** the lower pressure cylinder (15) for control of the acceleration forces and the processing force is supplied with a constant system pressure on its lower side, while the pressure on the upper side varies.

10. Method according to claim 9, **characterised in that** the two pressure cylinders (14, 15) are controlled and/or regulated in each case via their own circuit (24, 25).

11. Method according to claim 9 or 10, **characterised in that** the upper pressure cylinder (14) is controlled by pneumatic or hydraulic valves for rapid descent and ascent of the processing tool (11).

12. Method according to any one of claims 9 to 11, **characterised in that** the cylinder unit (16) composed of the two pressure cylinders (14, 15) and hence the processing tool (11) associated with the cylinder unit (16) can be pivoted for performing the processing steps.

13. Method according to any one of claims 9 to 12, **characterised in that** the processing tool (11) can be pivoted relative to the cylinder unit (16) composed of the two pressure cylinders (14, 15).

## Revendications

1. Dispositif (10) de traitement de chair, en particulier de poisson, comprenant un outil de traitement (11), une unité d'actionnement (12) associée à l'outil de traitement (11) pour déplacer l'outil de traitement (11) d'une position de départ dans une position de traitement et vice-versa ainsi qu'un dispositif de commande (13) qui est en liaison active avec l'outil de traitement (11) ou l'unité d'actionnement (12) pour commander l'outil de traitement (11), l'unité d'actionnement (12) comprenant une unité de cylindres (16) avec deux cylindres de pression (14, 15) qui sont disposés l'un derrière l'autre et sont reliés ensemble, l'outil de traitement (11) étant disposé sur l'un des deux cylindres de pression (15) de l'unité de cylindres (16) et les deux cylindres de pression (14, 15) pouvant être commandés indépendamment l'un de l'autre; dispositif **caractérisé en ce que** le cylindre de pression inférieur (15) est conçu et réalisé comme un élément d'amortissement actif.

2. Dispositif selon la revendication 1, **caractérisé en ce que** chaque cylindre de pression (14, 15) présente un circuit de commutation séparé (24, 25) avec au moins une soupape.

3. Dispositif selon la revendication 2, **caractérisé en ce qu'**au moins une soupape de régulation de pression proportionnelle (30, 31) est associée au circuit de commutation (25) du cylindre de pression inférieur (15).

4. Dispositif selon l'une quelconque des revendications 1 à 3, **caractérisé en ce que** l'outil de traitement (11) est disposé sur le cylindre de pression inférieur (15).

5. Dispositif selon l'une quelconque des revendications 1 à 4, **caractérisé en ce que** l'unité de cylindres (16) composée des deux cylindres de pression (14, 15) est conçue de manière à pouvoir pivoter.

6. Dispositif selon l'une quelconque des revendications 1 à 5, **caractérisé en ce que** l'outil de traitement (11) est disposé sur une tige de piston (22) du cylindre de pression inférieur (15) de manière à s'articuler.

7. Dispositif selon l'une quelconque des revendications 1 à 6, **caractérisé en ce que** les cylindres de pression (14, 15) peuvent être actionnés par énergie pneumatique ou hydraulique.

8. Dispositif selon l'une quelconque des revendications 2 à 7, **caractérisé en ce que** les deux circuits de commutation (24, 25) sont raccordés à un dispositif de commande commun (13).

9. Procédé de traitement de chair, en particulier de poisson, comprenant les étapes :
- Acheminement des produits à traiter (29) dans la zone d'un outil de traitement (11),
- Traitement des produits (29) à l'aide de l'outil de traitement (11), et
- Transport des produits traités (29) hors de la zone de l'outil de traitement (11),
l'outil de traitement (11) étant commandé par un premier cylindre de pression (14) pour amener rapidement l'outil de traitement (11) au produit (29) et relever rapidement l'outil de traitement (11) du produit (29), et les forces générées par l'accélération lors du déplacement et du retrait rapides de l'outil d'un côté et la force de traitement pendant le traitement de l'autre étant commandées par un deuxième cylindre de pression (15) ; procédé **caractérisé en ce que** le cylindre de pression inférieur (15) : est alimenté par une pression système constante sur sa face inférieure tandis que la pression sur sa face supérieure varie, afin de commander les forces d'accélération et la force de traitement.

10. Procédé selon la revendication 9, **caractérisé en ce que** les deux cylindres de pression (14, 15) sont commandés et/ou régulés chacun par le biais d'un circuit de commutation (24, 25) qui leur est propre.

11. Procédé selon les revendications 9 et 10, **caractérisé en ce que** le cylindre de pression supérieur (14) est commandé par des soupapes pneumatiques ou hydrauliques pour abaisser ou relever rapidement l'outil de traitement (11).

12. Procédé selon l'une quelconque des revendications 9 à 11, **caractérisé en ce que** l'unité de cylindres (16) formée par les deux cylindres de pression (14, 15), et, par conséquent, l'outil de traitement (11) associé à l'unité de cylindres (16), peut pivoter pour l'exécution des étapes de traitement.

13. Procédé selon l'une quelconque des revendications 9 à 12, **caractérisé en ce que** l'outil de traitement (11) peut pivoter par rapport à l'unité de cylindres (16) formée par les deux cylindres de pression (14, 15).
